# EUROPEAN PATENT APPLICATION

(11) **EP 2 272 666 A2**
(43) Date of publication of application: **12.01.2011**
(21) Application number: 10168212.8
(22) Date of filing: 02.07.2010
(51) Int. Cl.: B32B 15/01

(54) **Process for manufacturing foils, sheets and shaped parts from an alloy with titanium and aluminium as its main elements**

(30) Priority: 08.07.2009 EP 09401013
(71) Applicant: Brandenburgische Technische Universität Cottbus, 03046 Cottbus (DE)
(72) Inventor: Prof. Dr.-Ing. Zhang, Jiulai, 03046, Cottbus (DE); Prof. Dr.-Ing. Leyens, Christoph, 53639, Königswinter (DE)
(74) Representative: Wablat, Wolfgang

(57) **Abstract**

**Summary**

The invention is related to a process for manufacturing foils, sheets and shaped parts from an alloy with titanium and aluminium as its main elements wherein in that in a first phase a sandwich structure is made by bonding one or more foils or sheets of titanium and/or titanium alloy on one side or both sides with one or more aluminium and/or aluminium alloy foils or sheets in the first phase; and that in a second phase, the sandwich, either immediately or after an intermediary forming step, is firstly annealed below the melting temperature of the applied aluminium layer until the aluminium has completely diffused into the titanium layers and finally heat treated above the melting temperature of the applied aluminium foil but below the melting point of TiAl₃ until a homogenous titanium alloy or titanium aluminide alloy has formed.

## Description

The invention relates to a process for manufacturing foils, sheets and shaped parts from an alloy with titanium and aluminium as its main elements. Gamma Titanium aluminides are high-temperature intermetallic materials whose density is only half of that of steel or nickel based alloys. They can be applied at much higher temperatures than those of conventional titanium alloys. Technically relevant gamma titanium aluminide alloys consist of γ-phase (TiAl) and small amount of α₂ phase (Ti₃Al). Depending on chemical composition and heat treatment other minority phase can also occur. Sheets or foils made of titanium aluminides can be potentially applied in aero-engines and space shuttles. It is difficult to deform intermetallic materials because of their particular, ordered crystal structure. This makes the manufacture of sheets and thin foils particularly difficult. However, their availability is a precondition for the use of titanium aluminides in thin-walled sheet metal structures. Foils and thin sheets of conventional titanium alloys are also of interest as far as the application concerned. For this reason the invention is aimed at providing a costefficient method for manufacturing sheets, foils and components from gamma titanium aluminide alloys and conventional titanium alloys.

Alternative methods for manufacturing foils and sheets such as powder compaction, hot rolling and melt spinning under vacuum, electron-beam evaporation and plasma spraying have not become accepted until now. The main reasons are, on the one hand, the high cost and insufficient material quality, on the other. DE 43 04 481 A1 starts out from the assumption that such an alloy can be produced very cost-efficiently by casting but also by hot isostatic pressing of atomized powder.

According to the process described in JP 50649/89, thin sheets are manufactured from the intermetallic titanium - aluminium compound by performing the following steps:
- Heating the mixture, which consists of 35 to 44 per cent by weight of Al and the remainder of titanium under an inert-gas atmosphere to produce a melt,
- Continuous feeding of this melt to an open mould, which is defined by a pair of cooling rolls and a pair of lateral stops, the rolls rotating at a circumferential speed of 0.1 to 10 m/s, and
- Cooling the melt by means of the cooling rolls inside the roll gap, with a constant force being applied to these rolls in order to form a reinforced sheet whose thickness corresponds to the clearance between the rolls.

JP 122885-78 suggests another method for producing an alloy of titanium and aluminium. Titanium powder and aluminium powder are mixed; the mixture is then pressed and the compact heated, under vacuum or under an inert-gas atmosphere, to a temperature that is lower than the melting temperature of aluminium but not lower than 500° C. Heating of the resulting body is continued at a temperature that is equal or higher than the melting temperature of aluminium. This method is not suitable for production of large sheets and foils. Another disadvantageous effect is that due to the relatively large surface of aluminium powder, which is known to consist always of aluminium oxide, a large quantity of oxygen is introduced into the alloy, which may give rise to quality problems.

In many cases attempts were made to produce foils and sheets by reaction annealing of titanium and aluminium foils.

A method described in the literature is, for instance, vacuum hot pressing of titanium and aluminium foils arranged in alternate layers [Fukutomi, H., et al, Production of TiAAl sheet with oriented lamellar microstructure by diffusional reaction of aluminium and textured titanium foils; Materials Transactions, JIM, 1999. 40(7): p. 654-658 and Su., V., Zhang, G., Guo, J., Jia, J., Fu, H., Investigation on a fabrication technique of TiAl sheet, Materials Science Forum, 2005.475-479: p. 805-808]. They were annealed initially at 550°C and then at 630°C (below the melting point of aluminium) until the aluminium portion was used up completely. The final heat treatment at 1350°C, below the melting temperature of the intermetallic phase TiAl₃ (Tm[TiAl₃]= 1395°C), resulted in a sheet consisting of the two phases γ- TiAl and α₂-TiAl₃. However, this process has the following major disadvantages:
The different diffusion rates of aluminium and titanium during the formation of TiAl₃ result in the formation of porosity (Kirkendall pores). To prevent them the vacuum hot pressing process must be carried out at a pressure of 20 MPa and a temperature of 1350°C. This increases considerably the production cost; furthermore the production of foils becomes more difficult. Thicker sheets have to be made of a multitude of titanium and aluminium foils, which reduces the economic efficiency of the production process.

DE 10 2006 031 469 B4, too, describes a process for manufacturing a component from a titanium flat product for high-temperature applications, which includes the following steps:
a) applying an Al layer at least to one side of the titanium flat product by roll cladding the titanium flat product with an aluminium alloy foil
b) cold rolling the titanium flat product with the aluminium layer at a reduction ratio of 30-90%,)
c) soft annealing the titanium flat product covered with the aluminium layer in a continuous furnace or hood-type furnace ,
d) forming the component from the soft-annealed titanium flat product covered with aluminium layer,
e) heat-treating the component formed of the titanium flat product covered with the aluminium layer to induce the formation of a coating comprising an intermetallic phase.

Since the thickness of the Al layer on the titanium flat product does not exceed 90 µm, particularly 70 µm, after roll cladding and cold rolling, only a layer close to the surface has transformed into titanium aluminide. Although components made from it have the abrasion resistance of the alloy, their mechanical strength, however, largely corresponds to that of the titanium body.

Consequently, the aim of the invention is to suggest a process for manufacturing foils, sheets and shaped parts from an alloy with titanium and aluminium as its main elements, especially titanium alloy and gamma titanium aluminide alloy, by means of which these products can be produced cost-efficiently without defects related to conventional sintering processes occurring.

According to the invention, a process comprising the steps outlined in the main claim achieves this task.

The sub claims detail different solutions to this purpose.

In this process, foils, sheets and shaped parts are produced from an alloy with titanium and aluminium as its main elements, particularly titanium alloy or titanium aluminide alloy in that in a first phase a sandwich structure is made by bonding one or more foils or sheets of titanium and/or titanium alloy (titanium layer) on one or both side(s) with one ore more foils or sheets of aluminium and/or aluminium alloy (aluminium layer). As the sheets should be relatively thin, reference is made simply to foils for the sake of simplicity in the following, even if both foils and sheets may be applied. These foils consist of aluminium and/or aluminium alloys - in the following summed up under the term aluminium - on the one hand and titanium and/or titanium alloys - in the following summed up under the term titanium, on the other hand. In a second phase, the sandwich, either immediately or after an intermediary forming (cutting or/and deformation) step, is firstly annealed below the melting temperature of the applied aluminium layer until the aluminium has completely diffused into the titanium layers (first annealing) and secondly annealed above the melting temperature of the applied aluminium layer but below the melting point of TiAl₃ (second annealing) until a homogenous titanium alloy or titanium alluminide alloy has formed (two-step annealing treatment). The second annealing is conducted preferably in inert gas.

The sandwich mentioned above has a structure with a core of titanium (Ti). The core can consist of one or more titanium foils. On one or both side(s) of the core are/is (a) layer(s) of aluminium (Al). Thus, the sandwich comprises structures such as Al-Ti, Al-Ti-Ti-Al, Al-Al-Ti-Al-Al. However, a structure where Al is flanked on both sides by Ti, such as Ti-Al-Ti, is explicitly excluded.

That is, the combination of the special stacking sequence and the two-step annealing treatment are essential for the present invention.

If Al lies between two Ti layers, for example, if many Ti and Al foils are alternatively stacked, which is the case for other works in the literature, Kirkendall pores form along the former Al layer middle lines during annealing below the melting temperature of Al. In the second annealing step at higher temperature, pores cannot be removed if no pressure is applied. In order to get a dense material, for example pressing or rolling, is necessary. The application of pressing or rolling is disadvantageous due to the additional costs. In the case of warm pressing, thin foils of large area cannot be prepared because a uniform pressure distribution over the whole foil is very difficult to achieve. In addition, the foil dimension is also limited by the pressing force capacity. The low production efficiency with vacuum warm pressing is another drawback. The main disadvantage of rolling is that cold rolling cannot completely remove pores. Warm rolling is impossible due to oxidation and roll gap profile control.

According to the present invention, Al lies on the surface. If this is the case, the Kirkendall pores form only near the surface of the sandwich. Inside the pores is vacuum. Therefore, after the second annealing, the pores can be closed by Argon pressure, although no pressing or rolling is applied. In other words, a dense material can be produced by two-step annealing without application of pressing or rolling. Annealing of a sandwich in Argon having layer sequences different from the invention does not result in a dense material since argon penetrates into the Kirkendall pores.

Niobium-containing titanium aluminide alloys can be made by using niobium-containing Ti-foil or by using additional niobium foils between Ti foils. Additional niobium foils have to have Ti foils on both sides. This can necessitate the use of further Ti foils.

To produce thin foils or sheets of titanium alloy or titanium aluminide alloy, a titanium foil or titanium sheet is bonded/welded on one side or both sides with an aluminium layer to form a sandwich. The method of choice is vacuum diffusion welding. According to this method the layers are joined, while applying pressure to the outer layers, by increasing the temperature to a level where aluminium can diffuse into the titanium layer, thus joining the adjacent layers by diffusion. Preferably, the diffusion welding is carried out in vacuum at a temperature between 500 and the melting point of the applied aluminium foil (660°C for pure aluminium).

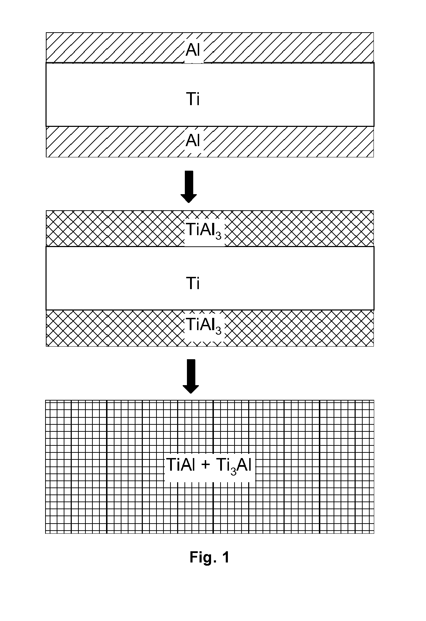

In the first annealing phase, this composite layer is annealed below the melting temperature of the aluminium until the aluminium has diffused completely into the titanium layers. This can be done in vacuum, inert gas or in air. Mainly TiAl₃ and remaining titanium are formed. Afterwards annealing is continued at temperatures above the melting temperature of the aluminium used but below the melting point of TiAl₃, until a homogenous titanium alloy or titanium aluminide alloy has formed. This second annealing is preferably carried out in inert gas in order to prevent oxidation, to close the Kirkendall pores from the first-stage annealing and to reduce evaporation of Al. In case of titanium alloy, TiAl₃ is dissolved in the second annealing stage by diffusion of Al into Ti. In case of γ-titanium aluminide alloy, TiAl₃ will react with titanium in the second annealing stage and mainly γ-TiAl and α₂-Ti₃Al are formed. The process for synthesis of γ-TiAl foils is shown schematically in Fig. 1. In this figure, an Al-Ti-Al sequence is used.

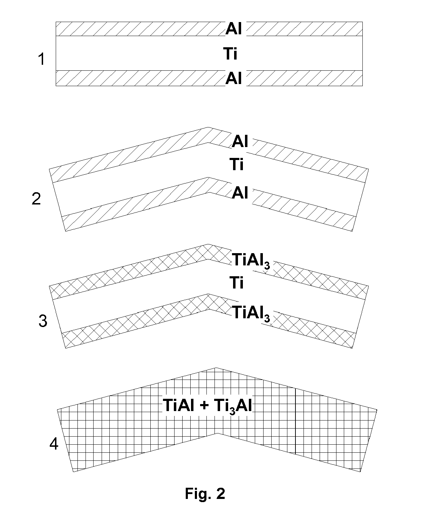

In order to produce a shaped foil, the sandwich can be plastically deformed before the two-step annealing. The process is schematically shown in Fig. 2. After the diffusion welding, only a very thin TiAl₃ layer will form. Therefore, the sandwich is still very ductile. It can be even deformed at room temperature.

So as to generate the pressure necessary for vacuum diffusion welding, a warm press can be used. In this invention a thermal expansion tool is preferred. The foils are fixed in a device comprising a tension member made of a material with a lower thermal expansion coefficient and a compression member made of a material with a higher thermal expansion coefficient, i.e. the material of the tension member has a lower thermal expansion coefficient than the material of the compression member. Pressure is built up due to the stress occurring as a consequence of different expansion behaviour during heating. A compression member is defined as the member, which has a compressive stress in the material at the working temperature. A tension member is defined as the member which has a tensile stress in the material at the working temperature. Such a device is not limited to application for diffusion welding between Ti and Al. It can be used in any cases where a pressure is needed at high temperature. For low temperature (<660°C) application, austenite steel (compression) - martensite steel (tension)-tool can be used. Such a device can be used for the diffusion welding between Ti and Al. For intermediate temperature application, i.e. up to 1000°C, Ni- or Co-alloy alloy can be used for the tension member and austenite steel is used for the compression member. For high-temperature application, i.e. up to 1100°C, Ni- or Co-alloy are used for the compression member and Mo-alloy, W-alloy, Nb-alloy or Ta-alloy are suitable as material of the tension member. For very high temperatures, i.e. up to 1150°C, Mo- or W-alloy are used for the tension member and Nb- or Ta-alloy are the materials of choice fo the compression member. For very high temperature with very high stress, i.e. temperatures up to 1150°C, a tool made from Mo-alloy as the compression member and W-alloy as the tension member can be used.

In order to increase the production efficiency, a multitude of sandwiches can be prepared during diffusion welding. Between the sandwiches antitack agent such as boron nitride, graphite (as spray, paint or foil) can be used to prevent the sandwiches from sticking to each other. For example, a multilayer of sandwiches can wound on a mandrel as continuous band or as pieces whose length corresponds to the circumference of the mandrel. The mandrel represents a compression member as described above. The sandwich coil with the mandrel is inserted in a ring. When the entire assembly is heated to the temperature required for diffusion welding, the mandrel expands more than the ring surrounding it. The ring represents a tension member as described above. The layers of foil are pressed together, resulting in welding.

Preferably, the multitude of sandwiches are present as continuous coils.

It is in accordance with the invention to embed, during this process, reinforcements in the form of fibres, wires or particles of high-strength materials, in particular niobium alloys and/or silicon carbide, between the individual layers so that they are firmly enclosed by the final product.

As already outlined above, the present invention is also related to a device providing pressure at high temperatures, wherein the device is **characterized in that** it comprises a tension member and a compression member, wherein the material of the tension member has a lower thermal expansion coefficient than the material of the compression member. The device is not limited to application for diffusion welding between Ti and Al. It can be used in any cases where a pressure is needed at high temperature.

One embodiment of the device is **characterized in that** the compression member consists of two plates and the tension member is a multitude of screws.

Another embodiment of the device is **characterized in that** the compression member is a solid or hollow mandrel and the tension member is a ring.

Preferred materials with respect to the tension and the compression member are as described above taking the different temperature ranges into consideration.

### Description of the figures

- Fig. 1: shows schematically a process to produce a γ-TiAl foil. At first, a sandwich is prepared by, for example, diffusion welding. In the first annealing phase, mainly TiAl₃ and remaining titanium are formed. Afterwards annealing is continued at temperatures above the melting temperature of the aluminium used but below the melting point of TiAl₃, until a homogenous titanium alloy or titanium aluminide alloy has formed. TiAl₃ reacts with titanium in the second annealing stage and mainly γ-TiAl (and α₂-Ti₃Al) are formed.
- Fig. 2: shows a process to produce a shaped γ-TiAl foil
1: sandwich preparation, for example, through diffusion welding
2: sheet metal deformation,
3: first annealing, 500°C-660°C,
4: second annealing, below the melting point of TiAl₃

The invention will now be described in greater detail by means of an embodiment:
**Example**: TiAl foil: A specimen (Ti/Al) consists of one titanium foil (diameter 26 x 0.025 mm²) and one aluminium foil (diameter 26 x 0.020 mm²), a second specimen (Al/Ti/Ti/Al) consists of two titanium foils and an aluminium foil each as the covering layer of the same dimension. The two specimens are placed one above the other with boron nitride as antitack agent and fixed between two thick disks made of austenitic high-grade steel NiCr 18 10 with screws made of high-temperature martensitic steel X20CrMoV 121.

The fixed specimens are annealed at 600°C for 30 hours. The specimens are then removed from the fixing device, placed between two molybdenum foils and annealed in argon (approx. 1.2 bar) at 1300°C for five hours and at 1400°C for one hour. The resulting specimen is dense and shows a coarse lamellar microstructure; there are only a few isolated pores on the surface that can be easily removed by grinding. A duplex structure (1300°C *15* h) or a globular structure (1200°C / 5 h) is formed at the lower temperatures of the second annealing stage. EDS analysis on the specimen with a globular microstructure shows that the specimen consists of γ-TiAl and α₂-Ti₃Al. A corrugated foil was produced. For that purpose two Ti foils (0.025 mm) and two Al foils (0.020 mm) measuring 30x25 mm and arranged in the sequence Al/Ti/Ti/Al were annealed in the same tool under vacuum at 600°C / 5 h, then folded to produce the shape at room temperature and finally annealed in a graphite tool under a weight at 600°C / 25 h + 1200°C / 5 h in Ar (approx. 1.2 bar).

## Claims

1. Process for manufacturing foils, sheets and shaped parts from an alloy with titanium and aluminium as its main elements **characterized in that** in a first phase a sandwich structure is made by bonding one or more foils or sheets of titanium and/or titanium alloy on one side or both sides with one or more aluminium and/or aluminium alloy foils or sheets; and that in a second phase, the sandwich, either immediately or after an intermediary forming step, is firstly annealed below the melting temperature of the applied aluminium layer until the aluminium has completely diffused into the titanium layers and secondly annealed above the melting temperature of the applied aluminium foil but below the melting point of TiAl₃ until a homogenous titanium alloy or titanium aluminide alloy has formed.

2. Process according to Claim 1, **characterized in that** additional niobium foils are inserted in the sandwich between foils or sheets of titanium and/or titanium alloy.

3. Process according to Claim 1 or 2, **characterized in that** bonding is achieved by means of diffusion welding in which the sandwich is annealed under a pressure at a temperature at which aluminium starts diffusing into the titanium layer but still below the melting point of aluminium, ranging from 500°C to 660°C until the adjacent layers are joined by that diffusion.

4. Process according to Claim 3, **characterized in that** a multitude of sandwiches is diffusion-welded simultaneously with antitack agent such as Boron nitride or graphite between individual sandwiches.

5. Process according to Claim 4, **characterized in that** the multitude of sandwiches is continuous coils.

6. Process according to any one of Claims 1-5, **characterized in that**, during the process, reinforcements in the form of fibres, wires or particles of high-strength materials are embedded between the individual layers in such a way that these reinforcements are firmly enclosed by the final product.

7. Process according to Claim 6, **characterized in that** the reinforcements are niobium alloys and/or silicon carbide.

8. A device providing pressure at high temperatures, **characterized in that** the device comprises a tension member and a compression member, wherein the material of the tension member has a lower thermal expansion coefficient than the material of the compression member.

9. A device providing pressure at high temperatures according to Claim 8, **characterized in that** the compression member consists of two plates and the tension member is a multitude of screws.

10. A device providing pressure at high temperatures according to Claim 8, **characterized in that** the compression member is a solid or hollow mandrel and the tension member is a ring.

11. A device providing pressure at high temperatures according to one of Claim 8-10, **characterized in that** the compression member is made of austenitic steel and the tension member is made of ferritic or martensitic steel or Ni- or Co-alloy.

12. A device providing pressure at high temperatures according to one of Claim 8-10, **characterized in that** the compression member is made of Ni-or Co-alloy and the tension member is made of Nb-, Ta-, Mo- or W-alloy.

13. A device providing pressure at high temperatures according to one of Claim 8-10, **characterized in that** the compression member is made of Nb-or Ta-alloy and the tension member is made of Mo- or W-alloy.

14. A device providing pressure at high temperatures according to one of Claim 8-10, **characterized in that** the compression member is made of Mo-alloy and the tension member is made of W-alloy.

15. Use of a device according to any one of claims 8-14 in a process according to any one of claims 1-7 to provide pressure at high temperatures during diffusion welding.
